# EUROPEAN PATENT SPECIFICATION

(11) **EP 1 856 827 B1**
(45) Date of publication and mention of the grant of the patent: **29.04.2009**
(21) Application number: 05717309.8
(22) Date of filing: 01.03.2005
(51) Int. Cl.: H04B 17/00

(54) **A METHOD, DEVICE ARRANGEMENT, TRANSMITTER UNIT AND RECEIVER UNIT FOR GENERATING DATA CHARACTERISING MIMO ENVIRONMENT**
VERFAHREN, EINRICHTUNGSANORDNUNG, SENDEREINHEIT UND EMPFÄNGEREINHEIT ZUR ERZEUGUNG VON MIMO-UMGEBUNG CHARAKTERISIERENDEN DATEN
PROCEDE, DISPOSITIF, UNITE DE TRANSMISSION ET UNITE DE RECEPTION PERMETTANT DE GENERER DES DONNEES CARACTERISANT UN ENVIRONNEMENT MIMO

(43) Date of publication of application: 21.11.2007
(73) Proprietor: Elektrobit System Test OY, 90460 Oulunsalo (FI)
(72) Inventor: KOLU, Janne, FI-90630 Oulu (FI); AIRAKSINEN, Olli, FI-00520 Helsinki (FI); SÄRKELÄ, Ville, FI-91980 Lumijoki (FI); BRAZ, Filipe, P-2815-746 Sobreda (PT); KRANS, Pertti, S-95335 Haparanda (SE)
(74) Representative: Brax, Matti Juhani
(86) International application number: PCT/FI2005/050055
(87) International publication number: WO 2006/092462

(56) References cited:
- ZHU W ET AL: 'An Open Access Wideband Multi-Antenna Wireless Testbed with Remote Control Capability.' TRIDENTCOM 2005. 23 February 2005 - 25 February 2005, pages 72 - 81, XP010774259
- MURPHY P ET AL: 'An FPGA based rapid prototyping platform for MIMO systems.' SIGNALS, SYSTEMS AND COMPUTERS. vol. 1, 09 November 2003 - 12 November 2003, pages 900 - 904, XP010702534
- KOLU J ET AL: 'A real-time simulator for MIMO radio channels.' WIRELESS PERSONAL MULTIMEDIA COMMUNICATIONS. vol. 2, 27 October 2000 - 30 October 2000, pages 568 - 572, XP010619152

## Description

### Field of the invention

The invention relates to a method and arrangement for generating data for transmitter or receiver simulations where the generated data includes Multiple Input Multiple Output radio environment (MIMO) characteristics. The invention also relates to a transmitter baseband unit and receiver baseband unit, which are utilized in the method.

### Background of the invention

Simulation of a radio environment has gained foothold in the development work of new cellular radio systems. The paper "An Open Access Wideband Multi-Antenna Wireless Testbed with Remote Control Capability" by Weijun Zhu et al. introduces an open access wideband multi-antenna wireless testbed which is configured as a four transmit antenna by four receive antenna system based on software defined radio technology. It operates in the 2. 4GHz ISM band and supports an RF bandwidth compatible to IEEE 802. 11 a/g standard. This paper presents a robotic positioning system to automatically control the position and orientation of the antenna array by any computer on the Internet. The system includes a set of software with the focus on MIMO channel characterization and MIMO-OFDM packet communications. A data acquisition system and an offline processing is also provided. Another example of a simulation apparatus is PROPSim C8 digital radio channel simulator, which is available from ELEKTROBIT TESTING Ltd. It comprises eight combinable channels for simulation. In the PROPSim C8 radio channel simulator, the channel is modelled with FIR filters (Finite Impulse Response) that form a convolution between the channel model and the input signal in such a manner that the signal that is delayed by different delays is weighted by channel coefficients, i.e. tap coefficients, and the weighted signal components are summed. The channel coefficients are altered to correspond to the behaviour of an actual radio channel. By enabling a flexible distribution of the baseband parts in the simulator, multiple signal propagation paths in the radio channel can be simulated, if necessary.

The simulation to be performed is defined in a radio channel simulator, i.e. its parameters, such as the number of channels to be simulated, the number and connections of input and output signals are fed in. For example, PROPSim C8 radio channel simulator can be utilized in the simulation. A control unit of the PROPSim C8 channel simulator optimises the use of the simulator equipment based on the parameters.

The future air interface in wireless digital cellular systems provides significantly higher capacity and bit rates compared to prior art systems. The performance improvement is based on new transmission methods such as multicarrier techniques (OFDM), and Multiple Input Multiple Output (MIMO) transmission systems. In MIMO systems multiple transmitters, antennas and receivers are used instead of one transmitter, antenna and receiver. In MIMO system, more efficient utilization of the radio channel can be achieved by combining the time, frequency and spatial characteristics of the radio channel. With MIMO concept, it is possible to create several uncorrelated Space-Time-Frequency radio channels, which can be differentiated from each other by coding for example. It is not possible to simulate MIMO environment by using PROPSim C8 simulator only.

Above-mentioned sets new requirements for the development of transmission systems, and for the simulation systems, so that created systems can function reliably in a real multipath and multi-antenna environment. To achieve that realistic MIMO radio channel models in addition to real-time simulation tools and field measurements are needed. Measuring the multipath environment with a MIMO-channel sounder and post-processing the recorded data can provide a realistic radio channel model. As a result we get large number of impulse responses, from which can be calculated a model for the radio environment. However, the model is large containing many propagation data. That is why the running of the model typically requires computing power that exceeds the capacity of a standard PC-based simulation environment.

It is also possible to create a multipath transmission model purely on mathematical basis. It is possible to create a model of an indoor or outdoor environment using objects and surfaces, which can scatter, reflect and attenuate radio waves. In that artificial model environment, it is also possible to locate a transmitter and receiver. After that, it is possible to calculate possible radio paths between the transmitter and receiver. One example for making the calculation is PROPLab channel modelling software, available from ELEKTROBIT TESTING Ltd, which is usable in two-dimensional cases.

The main problem in pure computer simulations is the required computing power in multichannel case. The calculation can take so long that it is not reasonable to make it at all. If one because of that wants to speed up the simulation one must simplify some of the basic variables used in the simulation, for example use only one channel. This leads to unreliable simulation results.

Another thing that increases required computing power is that the simulation must be made also with very small bit error ratios, for example in the category of 10⁻⁵, which is a considerably smaller value than 10⁻², which is normally used for voice connection simulations.

### Summary of the invention

The invention relates to the development of radio channel equipment. An object of the invention is to provide a test environment and test method to test MIMO systems in real time with a possibility to utilize a real air interface.

The objects of the invention are achieved by a method and an arrangement according to the invention, which comprises a multichannel transmitter baseband unit, multichannel up-converter, MIMO radio link system, multichannel down-converter and multichannel receiver baseband unit. For example, MatLab software can generate transmitter data in an external device, which data is then saved in the multichannel baseband unit as an off-line process. Therefrom the data can be launched via an up-converter to a MIMO system. The propagation characteristics of the radio channel in the MIMO system scramble the transmitted data. Received and down-converted data is saved in the multichannel receiver baseband unit according to the invention. Therefrom the received data is advantageously fed to an off-line processing unit where received data can be used as source data for different receiver algorithms.

An advantage of the invention is that fast real-time MIMO simulation is possible.

Another advantage of the invention is that real air interface characteristics of MIMO system can be utilized.

Another advantage of the invention is that it can be used to boost up receiver or transmitter software simulations where real MIMO propagation data is utilized.

Another advantage of the invention is that because of the synchronization accuracy of the system the memory capacity of the test system can be used for test data very effectively because of exact start of recording in the receiver baseband unit.

Another advantage of the invention is that it is also possible to use external clock in the simulation system if needed.

Another advantage of the invention is that also effects of space diversity caused by multiple antennas can be tested.

Yet another advantage of the invention is that both transmitter data and receiver data can be controlled using graphical user interface.

The idea of the invention is as follows: Transmitter data for the MIMO system is generated off-line for example with MatLab software. The transmitter data comprises both an in-phase component (I) and a quadrature component (Q) for each transmission channel. The off-line-created transmitter data is transferred non real-time to a baseband transmitter unit according to the invention, which advantageously comprises eight channels. After triggering, the transmitter data is advantageously transferred from the transmitter baseband unit to an up-converting system having at least equal number of transmission channels. For example, PROPSim C8 simulator can be used for that. The up-converted signals are then transmitted over radio channels through a real MIMO antenna system. The received data at the receiver end is down-converted, for example using PROPSim C8 simulator. After that, the received data is saved in the receiver baseband unit according to the invention in a digital format for later analysis. From the receiver baseband unit the data can then be transferred off-line to a separate processing unit where different kind of receiver algorithms can be tested using the received data.

### Brief description of the drawings

The invention is described in detail below. Reference is made to the accompanying drawings in which
Fig. 1 shows a schematic representation of the first embodiment of real-time MIMO simulation environment according to the invention;
Fig. 2 shows a schematic representation of the second embodiment of real-time MIMO simulation environment according to the invention;
Fig. 3 shows as an exemplary block diagram a transmission baseband channel according to the invention;
Fig. 4 shows as an exemplary block diagram a receiver baseband channel according to the invention;
Fig. 5a shows as an exemplary block diagram a transmission baseband unit according to the invention;
Fig. 5b shows as an exemplary block diagram a receiver baseband unit according to the invention;
Fig. 6 shows an example of a triggering event according to the invention; and
Fig. 7 shows as exemplary flow chart the main phases of MIMO simulation according to the invention.

### Detailed description

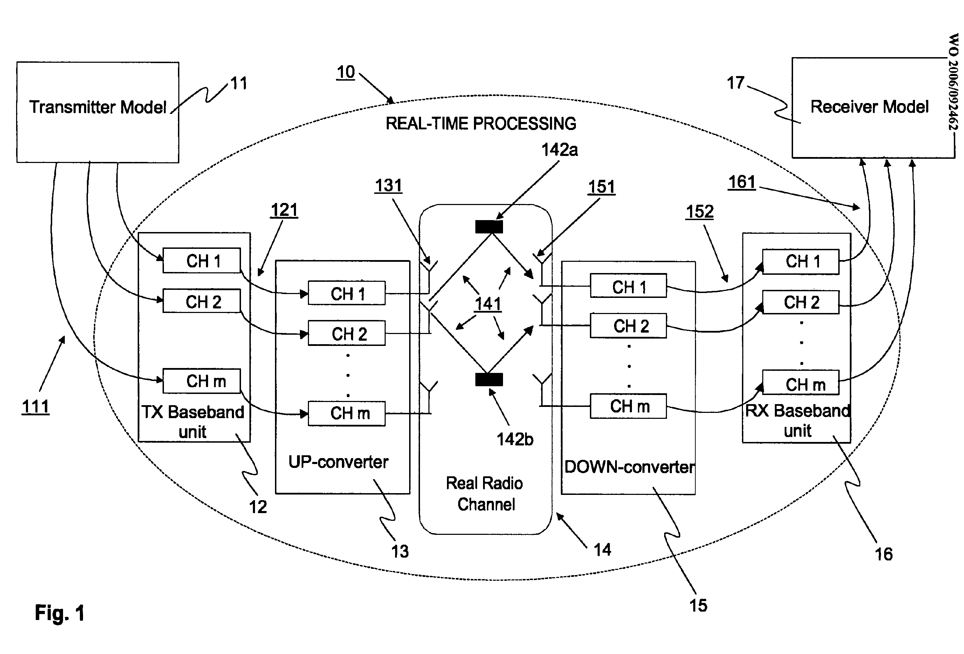

Fig. 1 depicts an example of the first embodiment of the real-time MIMO testing environment according to the invention. A transmitter model 11 is created as off-line design work in an external equipment, which is advantageously a normal PC with MatLab software. The created transmitter model 11 is transferred advantageously non real-time to the MIMO system 14 according to the invention from the external equipment.

Correspondingly in Fig. 1 is depicted a receiver model 17 which is included in a second external equipment. The second equipment is advantageously a normal PC with MatLab software, which is utilized in the simulation of appropriate receiver algorithms.

With a dash line, reference sign 10, is depicted the real-time MIMO simulation environment according to the first embodiment of the invention. It comprises a transmitter baseband unit 12, an up-converter 13, a real-time MIMO radio channel environment 14, a down-converter 15 and a receiver baseband unit 16.

The transmitter baseband unit 12 according to the invention comprises m channels. Each of the m channels comprises an in-phase component (I) and a quadrature component (Q) which are not shown as separate components in Fig. 1. Fixed cables 111 connect the external equipment comprising the transmitter model 11 to the transmitter baseband unit 12. Advantageously each one of the channels CH1, CH2 to CHm of the transmitter baseband unit 12 is connected to the transmitter model equipment by one cable. The number of channels in transmitter baseband unit 12 is advantageously eight.

The transmitter baseband unit 12 is connected to an up-converter 13 by as many cables 121 as there are transmission channels in the transmitter baseband unit 12. As an up-converter 13 can be utilized for example a PROPSim C8 simulator that has eight distinct channels; channels CH1, CH2 to CH8. If PROPSim C8 simulator is used as an up-converter 13 then eight connection cables are needed, reference sign 121. It is also possible to use some other equipment as an up-converter, which has at least equal number of channels as the transmitter baseband unit 12.

The up-converter 13 converts digital signals of the transmitter baseband unit 12 first to analog signals and after that transfers them up to utilized RF-frequency. The up-converted RF-signals are fed from each of the channels of the up-converter 13 to a transmitter antenna system 131, which advantageously comprises an antenna array of several antennas. In Fig. 1 only one antenna per channel is drawn, but the transmitter antenna system 131 can advantageously comprise several transmitter antennas per channel to form a real MIMO environment. When the transmitter included in the up-converter 13 begins to transmit, it advantageously includes in the beginning of the transmission a preamble of a certain kind. This preamble informs the receiver when the actual transmission data begins. Therefore, the receiver knows beforehand when the transmitted data is coming and saves only that portion of the transmission.

With reference sign 141 is depicted, as an example, multipath of radio waves from transmitter antennas 131 connected to channel two of the up-converter 13 to receiver antenna system 151, which is connected to channel two of the down-converter 15. In Fig. 1 only one antenna per channel is drawn, but reference sign 151 can advantageously comprise several antennas per channel to form a real MIMO receiver environment. Several radio wave reflections occur on objects 142a and 142b before radio waves arrive to the receiver antenna 151. When several receiver antennas 151 are utilized instead of one, space diversity can be utilized to improve received signal, which has deteriorated due to reflections on the objects 142a and 142b.

In the down-converter 15, the received signals are first down-converted to baseband signals and then converted back to digital form. As was the case in the up-converter, also the down-converter can be realized for example by a PROPSim C8 simulator. After analog-to-digital conversion, the baseband digital signals are fed from the channels of the down-converter by cables 152 to the receiver baseband unit 16 according to the invention. The preamble included in the beginning of the transmission triggers data saving operation in the receiver baseband unit 16. Each of the channels CH1, CH2 to CHm begins its saving at the same instant, which advantageously is case-specific. With this arrangement, the memory of the receiver baseband unit 16 can be optimally used for saving only transmitted test signals.

From the receiver baseband unit 16 cables 161 transfer the saved data advantageously off-line to an external device. The transferred data is utilized there advantageously for receiver model tests. Different kind of receiver algorithms can be tested for finding the most appropriate one to the MIMO environment for example by using MatLab software.

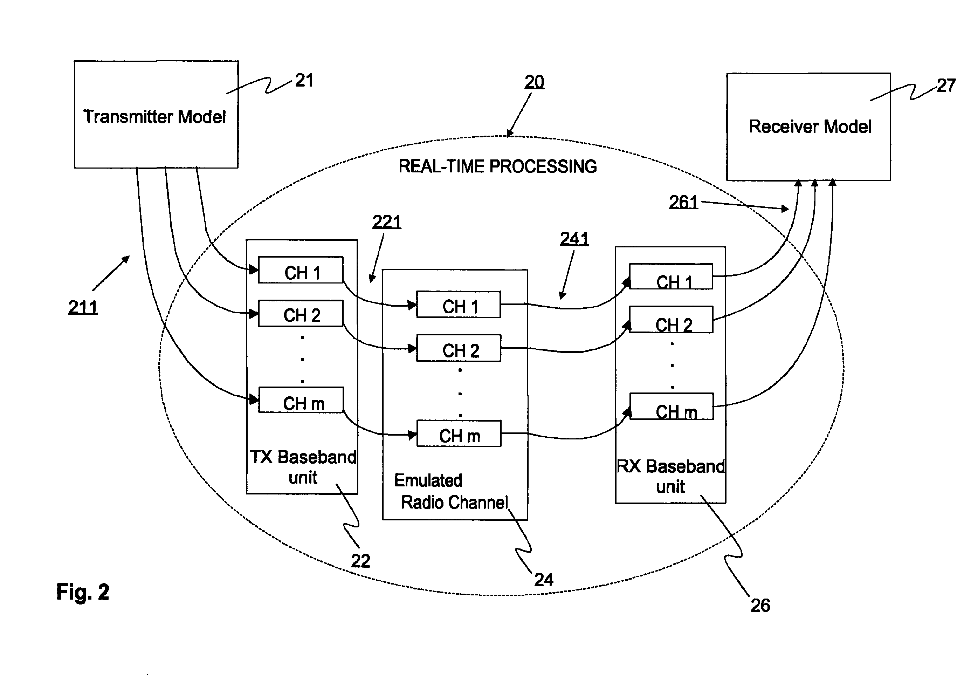

Fig. 2 illustrates an example of the second embodiment of the real-time MIMO processing environment according to the invention. With reference sign 21 is depicted a transmitter model, which is created as off-line design work in an external equipment, advantageously a normal PC with MatLab software. The created transmitter model 21 is transferred advantageously non real-time to the MIMO system 20 according to the invention.

In Fig. 2 is depicted a second external equipment with a receiver model 27, advantageously also a normal PC with MatLab software, which is used in the simulation of appropriate receiver algorithms.

With dash line, reference sign 20, is depicted the real-time MIMO simulation environment according to the second embodiment of the invention. It comprises a transmitter baseband unit 22, an emulated MIMO radio channel environment 24 and a receiver baseband unit 26.

The second embodiment of the invention comprises a transmitter baseband unit 22 with m channels CH1, CH2 to CHm. Each of the m channels comprises an in-phase component (I) and a quadrature component (Q) which are not shown as separate components in Fig. 2. Fixed cables 211 connect the external equipment comprising the transmitter model 21 to the transmitter baseband unit 22. Advantageously each one of the channels CH1, CH2 to CHm of the transmitter baseband unit 22 is connected to the transmitter model equipment by one cable. The number of channels in transmitter baseband unit 22 is advantageously eight.

In the second embodiment of the invention an emulated radio channel environment 24 substitutes the real radio channel environment. The baseband signals need not be transferred to an actual RF-frequency. One alternative for the emulated radio channel equipment is PROPSim C8 radio channel simulator, which can emulate eight radio channels. In PROPSim C8 radio channel simulator digital FIR filters emulate the behaviour of radio channels.

From the PROPSim C8 simulator fixed cables 241 convey scrambled baseband signals to the receiver baseband unit 26 according to the invention. The preamble included in the transmission triggers a saving operation of the received data in the receiver baseband unit 26. Each of the channels CH1, CH2 to CHm begins its saving at the same instant, which is case-specific.

From the receiver baseband unit 26 according to the invention cables 261 can transfer the saved data advantageously off-line to external equipment such as a receiver model 27, which can be used as a source data for receiver algorithm simulations.

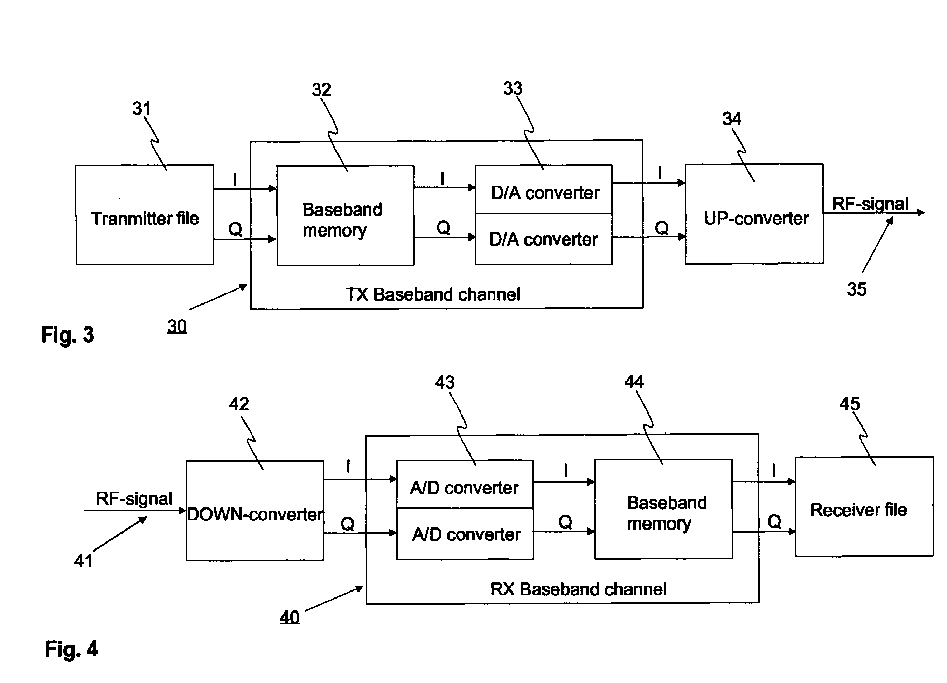

Fig. 3 illustrates an example of main functional blocks on the transmitter side. One transmitter baseband channel 30 according to the invention comprises a baseband memory 32 and two D/A converters 33. The transmitter data comprising in-phase component I and quadrature component Q are transferred as off-line operation from an external transmitter file 31 to the baseband memory 32, which is advantageously implemented with SDRAM memories (Synchronous Dynamic Random Access Memory). The whole transmitter test data can be as much as 1 Gbyte. When transmission triggering has been launched, the saved data is streaming from the transmitter baseband memory 32 to two D/A converters 33 after a case-specific delay with a speed of 25 Msps. Both signal components, I and Q, are conveyed after the D/A conversion to an up-converter 34. It shifts both signal components up to an operating frequency. The bandwidth of each channel in the operating frequency is advantageously 22 MHz. The RF-signal 35 to be transmitted is fed to a transmitter antenna system (not shown in Fig. 3).

Fig. 4 illustrates an example of main functional blocks on the receiver side. One receiver baseband channel 40 according to the invention comprises a baseband memory 44 and two A/D converters 43. The received RF-signals 41 from a receiver antenna system (not shown in Fig. 4) are down-converted by a down-converter 42. Both signal components I and Q are separately A/D converted by two A/D converters 43. Both digitalized signal components I and Q are conveyed to a receiver baseband memory 44 which is advantageously implemented with SDRAM memories. The size of the baseband memory 44 is one Gbyte. The receiver baseband channel 40 gets information from the transmitter baseband unit when the actual propagated or simulated transmitter data is on hand. This can be accomplished by a preamble of a certain kind in the transmission, which precedes the actual transmitter data. Only after a case-specific delay after the preamble the receiver baseband channel begins to save received data.

From the baseband memory 44 the received data is advantageously transferred off-line to a receiver file 45. The receiver file 45 can be for example in a PC where appropriate software is installed. There it is possible to test different kinds of receiver algorithms with the help of the received data.

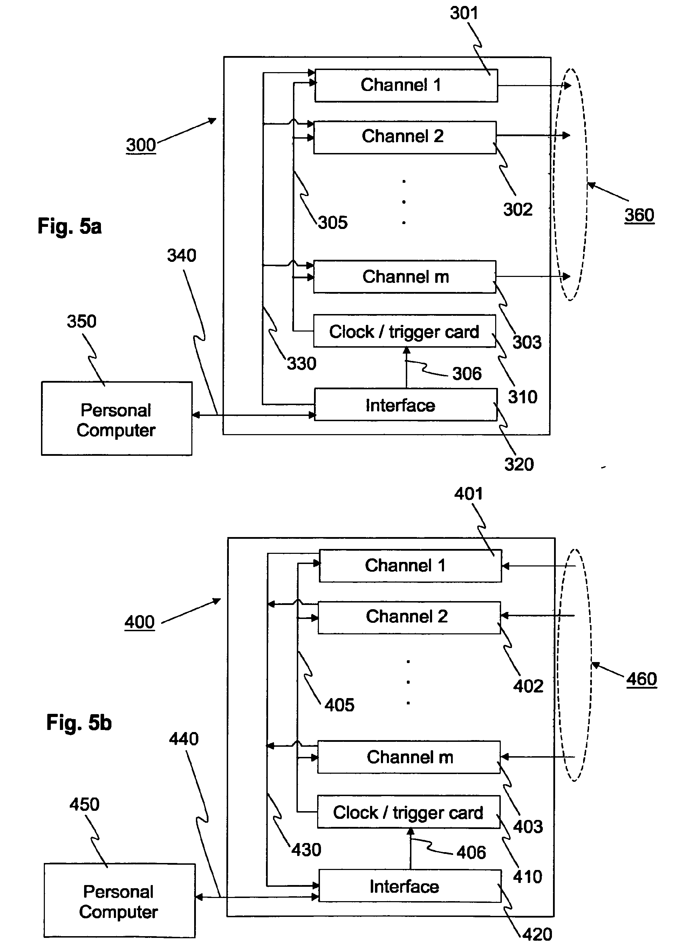

Figures 5a and 5b depict functional units, which are needed in the first embodiment according to the invention.

Fig. 5a shows an example of a transmitter baseband unit 300 according to the invention (corresponding to references 12 and 22 in Figures 1 and 2). The transmitter baseband unit 300 comprises m distinct parallel channels 301-303. Advantageously m equals to number eight. The baseband unit 300 comprises also a clock/trigger card 310 which gives both a transmission begins signal and clock pulses to the channels in the baseband transmitter unit, reference sign 305.

The transmitter baseband unit 300 comprises also an interface unit 320. An external PC 350 is connected via a cable 340 to the interface unit 320. The transmitter model can be conveyed first from PC 350 to the interface unit 320 and from there via a connection 330 to the baseband channels 301-303. The interface unit 320 has also a connection 306 to the clock/trigger card 310. With this connection 306 the user of the test system can give a trigger command to the system. As was depicted in Fig. 3 the digital signals are first advantageously converted to analog signals. Then they are transferred from channels 301-303 to an up-converter device (not shown in Fig. 5a). The synchronization accuracy between the channels of the transmitter baseband unit is less than 10 ns.

The clock/trigger card 310 also generates clock pulses, which are needed to stream saved transmitter data out from the channels 301-303 to an up-converter. Clock pulses are guided to the channels via connection 305. Analog signals streaming out from the channels 301-303 are depicted with reference sign 360.

Fig. 5b shows an example of a receiver baseband unit 400 according to the invention (corresponding to references 16 and 26 in Figures 1 and 2). The receiver baseband unit 400 comprises m distinct parallel channels 401-403. Advantageously m equals to number eight. The receiver baseband unit 400 comprises also a clock/trigger card 410, which gives clock pulses needed in A/D conversion and data saving operation to the channels of the receiver baseband unit. Clock pulses are guided to the channels via a connection 405.

The clock/trigger card 410 generates advantageously a start saving pulse. This starts, advantageously after a determinate delay, saving operation of the received data in the receiver baseband memories of the channels. Analog signals from a down-converter (not shown in Fig. 5b) to the baseband receiver channels are depicted with a reference sign 460. The information needed to generate the start saving pulse can be included in the beginning of the actual radio transmission or it is guided via a separate transmission media from the transmitter baseband unit 300 to the receiver baseband unit 400 (not shown in Figures 5a or 5b).

The receiver baseband unit 400 comprises also an interface unit 420. An external PC 450 is advantageously connected via a cable 440 to the interface unit 420. Via the interface unit 420, the received and saved data can be transferred from the channels 401-403 of the receiver baseband unit 400 first via connection 430 to the interface unit 420 and from there to the PC 450 via connection 440 as an off-line operation.

The interface unit 420 has also a connection 406 to the clock/trigger card 410. Through this connection, the user of the PC 450 can give for example an output command for transferring received data from the receiver baseband unit 400 to the PC 450. The PC 450 comprises advantageously software, which can be used in receiver algorithm simulations where the received data is used as source data.

In the second embodiment of the invention the baseband transmitter signals are advantageously conveyed as digital baseband signals to the emulated MIMO environment. From the emulated MIMO environment scrambled signals are conveyed in digital form to the receiver baseband unit. For that reason D/A or A/D converters or an up-converter or down-converter are not compulsory in the second embodiment.

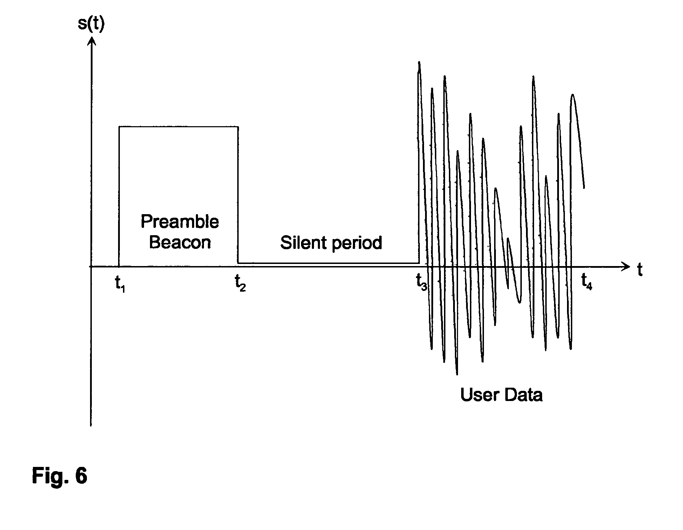

Figure 6 shows an example of how a preamble according to the invention can be utilized. At instant t₁ the transmitter baseband unit 300 sends a preamble having a specific length and content via one or several baseband transmission channels. The preamble ends at instant t₂. After that follows a silent period having a case-specific length. It ends at instant t₃. After instant t₃ the transmitter baseband unit 300 streams transmitter data from the memory units included in the baseband channels to the up-converter. Transmission speed is controlled by clock pulses, which the clock/trigger card sends to the baseband channels. The whole content of the channel memories is sent at instant t₄. After that, transmission is over.

The receiver baseband unit 400 is listening to the transmission all the time. That is why, when it receives the preamble sent by the transmitter baseband unit 300, it can find it easily in the beginning of the transmission. It decodes the content of the preamble and sets an instant after which data streaming to the channels 401-403 must be saved in the memory units of the baseband receiver channels. Because the sizes of the memory units both in the transmitter baseband unit 300 and in the receiver baseband unit 400 are equal, the whole transmission of the transmitter baseband unit 300 can be saved without difficulty to the receiver baseband unit 400.

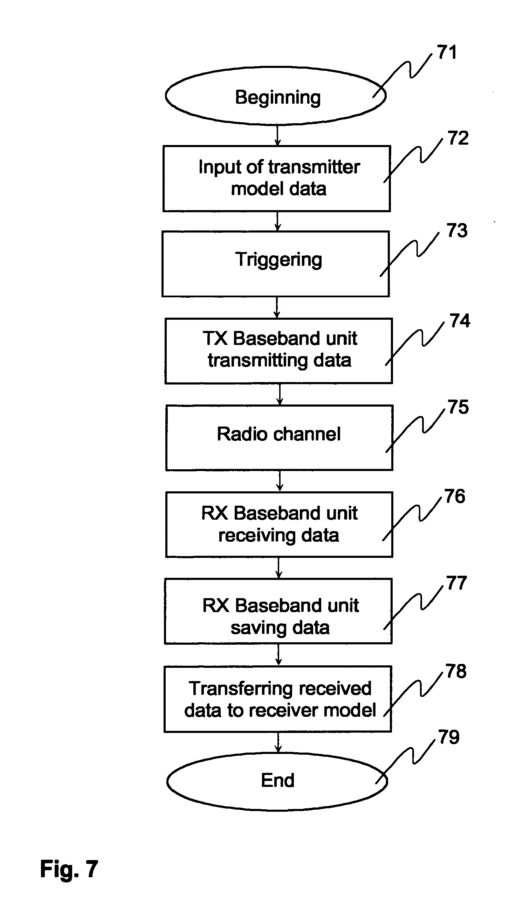

Fig. 7 shows as an exemplary flowchart main method steps when the present invention is utilized. The generation of data having MIMO characteristics is started in phase 71. In phase 72 the transmitter model is inputted off-line from an external device to the transmitter baseband unit according to the invention.

The triggering of the transmission occurs in phase 73, which means that the baseband transmitter unit sends a preamble according to the invention.

In phase 74 after a case-specific silent period the transmitter baseband unit according to the invention conveys its transmitter model data with predetermined speed via an up-converter to an antenna system, comprising advantageously transmitter antennas and receiver antennas, or to an emulated MIMO environment. In phase 75 either a real radio wave propagation or a radio wave simulation in MIMO environment occurs.

In phase 76 the receiver baseband unit receives first the preamble portion of the transmission. It decodes its content and determines an instant when the real transmitter model data arrives to the receiver. After the determined delay (silent period) the receiver baseband unit starts to save incoming data, phase 77. When the whole transmission of the data is over, saving operation ends.

The received and saved data, which can be utilized afterwards for example for receiver model simulations, is transferred as an off-line operation in phase 78 from the receiver baseband unit 400 to an external equipment, which can be for example a PC. The process ends after that in phase 79.

Some advantageous embodiments according to the invention were described above. The invention is not limited to the embodiments described. The inventional idea can be applied in numerous ways within the scope defined by the claims attached hereto.

## Claims

1. A method for generating data for transmitter or receiver simulations where the generated data includes Multiple Input Multiple Output radio environment characteristics, **characterised in that** in the method
- a transmitter model (11, 21) is loaded from an external device off-line (72) at least to two baseband transmitter channels (301-303) of a baseband transmitter unit (12, 22, 300) for building a transmitter model data
- triggering of transmission (73) happens in all baseband transmitter channels (301-303) at the same instant (t₁) which triggering causes firstly transmission of a preamble and after that a silent period of a case-specific length (t₂, t₃)
- transmission of the transmitter model data follows immediately after the end of the silent period (74, t₃, t₄)
- a Multiple Input Multiple Output radio environment (14, 24) scrambles (75) transmitted data due to multipath propagation
- a multichannel baseband receiver unit (16, 26, 400) having at least two baseband receiver channels (401-403) receives (76) the scrambled data
- the received scrambled data is saved in at least two baseband receiver channels (401-403) beginning after the end of the received preamble and silent period (77, t₃) and
- the saved data is transferred off-line (78) to an external equipment for building a receiver model (17, 27).

2. The method according to claim 1, **characterised in that** after triggering for accomplishing said transmission
- the preamble and silent period are conveyed as baseband signals from the transmitter baseband channels (301-303) to a Multiple Input Multiple Output radio environment (14, 24) and then
- the transmission model data is conveyed as baseband signals from the transmitter baseband channels (301-303) to Multiple Input Multiple Output radio environment (14, 24).

3. The method according to claim 2, **characterised in that** after triggering for accomplishing said transmission
- a D/A converter (33) converts the preamble and silent period to analog signals
- the D/A converter (33) converts the transmission model data to analog signals
- an up-converter (34) mixes said analog signals to RF-signals and
- the RF-signals are fed to a transmitter antenna system (131) comprising at least two antennas.

4. The method according to claim 1, **characterised in that** said scrambling in the Multiple Input Multiple Output radio environment (14) arises from
- transmission of the RF-signals using the transmitter antenna system (131) and
- multipath propagation to a receiver antenna system (151).

5. The method according to claim 1, **characterised in that** in said reception of the scrambled data
- a receiver antenna system (151) of at least two antennas receives transmitted RF-signals
- a down-converter (15) mixes the received RF-signals to baseband signals
- an A/D converter (43) converts the analog preamble and the silent period to digital signals, which are conveyed to a clock/trigger unit (410) and
- the A/D converter (43) converts the received analog transmission model data to digital signals, which are conveyed to the receiver baseband channels (401-403).

6. The method according to claim 1, **characterised in that** in said reception of the scrambled data
- the preamble and silent period are conveyed from the Multiple Input Multiple Output radio environment (14, 24) to a clock/trigger unit (410) and
- the scrambled data is conveyed from the Multiple Input Multiple Output radio environment (14, 24) to the receiver baseband channels (401-403).

7. The method according to claims 2 or 6, **characterised in that** said scrambling in the Multiple Input Multiple Output radio environment arises from radio channel simulation in the radio channel simulator (24).

8. A simulation arrangement for generating data for transmitter or receiver simulations where generated data includes Multiple Input Multiple Output radio environment (14, 24) characteristics, **characterised in that** the arrangement comprises
- a transmitter model (11, 21) in an external device
- a multichannel baseband transmitter unit (13, 23, 300) whereto the transmitter model is loadable off-line as transmitter model data at least to two baseband transmitter channels (301-303) of the baseband transmitter unit
- a means for transferring a preamble which is followed by a silent period and the transmitter model data to a Multiple Input Multiple Output radio environment (14, 24), which scrambles the transmitted data due to multipath propagation
- receiving means for receiving scrambled data from the Multiple Input Multiple Output radio environment (14, 24) and
- a multichannel receiver baseband unit (16, 26, 400) capable of saving the received transmitter model data, which is received after the preamble included in the beginning of the transmitter model data, having an equal number of channels (401-403) as the transmitter baseband unit (12, 22, 300).

9. The simulation arrangement according to claim 8, **characterised in that** the multichannel baseband transmitter unit (13, 23, 300) comprises a means (310) for triggering of transmission in all baseband transmitter channels (301-303) at the same instant (t₁), which triggering causes transmission of a preamble, silent period of a case-specific length and the transmitter model data following the end of the silent period.

10. The simulation arrangement according to claim 9, **characterised in that** the multichannel transmitter unit (12, 22, 300) comprises
- at least two channels (301-303) having
- a baseband memory (32) for saving the transmitter model data and
- a D/A converter (33) for converting the preamble, silent period and transmission model data to analog signals and
- a clock/trigger unit (310) for giving a transmission triggering signal and clock pulses to the channels (301-303).

11. The simulation arrangement according to claim 8, **characterised in that** said means for transferring the preamble, silent period and transmitter model data to Multiple Input Multiple Output radio environment (14, 24) comprises an up-converter (34), which mixes said signals to RF-signals.

12. The simulation arrangement according to claim 8, **characterised in that** said Multiple Input Multiple Output radio environment (14) comprises
- a transmitting antenna system (131) comprising at least two antennas
- a multipath propagation environment and
- a reception antenna system (151) comprising at least two antennas.

13. The simulation arrangement according to claim 8, **characterised in that** said receiving means for receiving scrambled data from the Multiple Input Multiple Output radio environment (14, 24) comprises a down-converter (15, 42) for mixing the received RF-signals to baseband.

14. The simulation arrangement according to claim 8, **characterised in that** the multichannel receiver unit (16, 26, 400) comprises
- at least two channels (401-403) having
- an A/D converter (43) for converting the preamble, silent period and received data to digital form and
- a baseband memory (44) for saving the converted data and
- a clock/trigger unit (410) for giving a reception triggering signal and clock pulses to the channels (401-403).

15. The simulation arrangement according to claim 8, **characterised in that** said Multiple Input Multiple Output radio environment (24) comprises a digital radio channel simulator where the radio channels are simulated by FIR filters at a baseband frequency for arising a scrambling effect to the transmitter model data.

16. A baseband transmitter unit (300) for generating data for transmitter or receiver simulations where generated data includes Multiple Input Multiple Output radio environment (14, 24) characteristics, **characterised in that** it comprises
- at least two baseband transmitter channels (301-303) whereto an external transmitter model (11, 21) is loadable off-line from an external device (350) as a transmitter model data
- a clock/triggering unit (310) connected to the channels (301-303)
- for triggering of transmission in all baseband transmitter channels at the same instant (t₁) which triggering causes transmission of a preamble and a silent period of a case-specific length after it; and
- for generating clock pulses to the channels (301-303) during transfer of the transmitter model data out from the channels and
- an interface unit (320) for transferring commands and transmitter model data (11, 21) from an external device (350) to at least one of the channels (301-303) of the baseband transmitter unit.

17. The baseband transmitter unit (300) according to claim 16, **characterised in that** the channels (301-303) comprise
- a memory (32) for in-phase component (I) and quadrature component (Q) of the transmitter model data and
- two D/A converters (33) for converting both signal components (I, Q) to analog signals.

18. A baseband receiver unit (400) for generating data for transmitter or receiver simulations where generated data includes Multiple Input Multiple Output radio environment (14, 24) characteristics, **characterised in that** it comprises
- at least two baseband receiver channels (401-403) for receiving real time data
- a clock/triggering unit (410) connected to the channels (401-403)
- for triggering of a saving operation of the received data in all baseband receiver channels at the same instant when a preamble and silent period of a case-specific length included in a transmitter model data are detected and
- for generating clock pulses needed to transfer the received data the channels (401-403) and
- an interface unit (420) for receiving user commands and for transferring the received transmitter model data to an external device (450).

19. The baseband receiver unit (400) according to claim 18, **characterised in that** the channels (401-403) comprise
- two A/D converters (33) for converting both signal components (I, Q) to digital signals and
- a memory (44) for saving both in-phase component (I) and quadrature component (Q) of the transmitter model data.

## Patentansprüche

1. Verfahren zum Erzeugen von Daten für Sender- oder Empfängersimulationen, wobei die erzeugten Daten Mehrfacheingangs-Mehrfachausgangs-Funkumgebungs-Charakteristika beinhalten, **dadurch gekennzeichnet, dass** in dem Verfahren
- ein Sendermodell (11, 21) von einer externen Vorrichtung off-line (72) an zumindest zwei Basisbandsenderkanälen (301-303) einer Basisbandsendereinheit (12, 22, 300) zum Aufbauen von Sendermodelldaten geladen wird
- das Auslösen der Übertragung (73) in allen Basisbandsenderkanälen (301-303) zum selben Zeitpunkt (t1) stattfindet, wobei das Auslösen zuerst das Senden einer Präambel und danach einer Stilleperiode einer fallspezifischen Länge (t₂, t₃) verursacht
- das Senden der Sendermodelldaten unmittelbar nach dem Ende der Stilleperiode (74, t₃, t₄) folgt
- eine Mehrfacheingangs-Mehrfachausgangs-Funkumgebung (14, 24) die übertragenen Daten aufgrund von Mehrpfadausbreitung verwürfelt (75)
- eine Mehrkanal-Basisbandempfängereinheit (16, 26, 400) mit zumindest zwei Basisbandempfängerkanälen (401-403) die verwürfelten Daten empfängt (76)
- die empfangenen verwürfelten Daten in zumindest zwei Basisbandempfängerkanälen (401-403) gesichert werden, beginnend nach dem Ende der empfangenen Präambel und der Stilleperiode (77, t₃) und
- die gesicherten Daten off-line (78) an eine externe Ausrüstung zum Aufbauen eines Empfängermodells (17, 27) übertragen werden.

2. Verfahren gemäß Anspruch 1, **dadurch gekennzeichnet, dass** nach dem Auslösen zum Erzielen der Sendung
- Präambel und Stilleperiode als Basisbandsignale aus den Sender-Basisbandkanälen (301-303) an eine Mehrfacheingangs-Mehrfachausgangs-Funkumgebung (14, 24) befördert werden, und dann
- die Sendemodelldaten als Basisbandsignale aus den Sender-Basisbandkanälen (301-303) an die Mehrfacheingangs-Mehrfachausgangs-Funkumgebung (14, 24) befördert werden.

3. Verfahren gemäß Anspruch 2, **dadurch gekennzeichnet, dass** nach Auslösen zum Erzielen der Sendung
- ein D/A-Wandler (33) die Präambel und Stilleperiode in Analogsignale wandelt
- der D/A-Wandler (33) die Sendermodelldaten in Analogsignale wandelt
- ein Hochkonverter (34) die Analogsignale mit Funkfrequenzsignalen mischt und
- die Funkfrequenzsignale einem Senderantennensystem (131), das zumindest zwei Antennen umfasst, zugeführt werden.

4. Verfahren gemäß Anspruch 1, **dadurch gekennzeichnet, dass** das Verwürfeln in der Mehrfach-Eingangs-Mehrfach-Ausgangs-Funkumgebung (14, 24) herrührt von
- Übertragung der RF-Signale unter Verwendung des Senderantennensystems (131), und
- Mehrpfadausbreitung an ein Empfängerantennensystem (151) .

5. Verfahren gemäß Anspruch 1, **dadurch gekennzeichnet, dass** beim Empfang der verwürfelten Daten
- ein Empfängerantennensystem (151) aus zumindest zwei Antennen übertragene Funkfrequenzsignale empfängt
- ein Abwärtswandler (15) die empfangenen Funkfrequenzsignale zu Basisbandsignalen mischt
- ein A/D-Wandler (43) die analoge Präambel und die Stilleperiode in Digitalsignale wandelt, die zu einer Takt/Auslöseeinheit (410) transportiert werden, und
- der A/D-Wandler (43) die empfangenen Analogübertragungsmodelldaten in Digitalsignale wandelt, die zu den Empfänger-Basisbandkanälen (401-403) befördert werden.

6. Verfahren gemäß Anspruch 1, **dadurch gekennzeichnet, dass** beim Empfang der verwürfelten Daten
- die Präambel und die Stilleperiode von einer Mehrfacheingangs-Mehrfachausgangs-Funkumgebung (14, 24) zu einer Takt/Auslöseeinheit (410) befördert werden, und
- die verwürfelten Daten von der Mehrfacheingangs-Mehrfachausgangs-Funkumgebung (14, 24) zu den Empfänger-Basisbandkanälen (401-403) befördert werden.

7. Verfahren gemäß Anspruch 2 oder 6, **dadurch gekennzeichnet, dass** das Verwürfeln in der Mehrfacheingangs-Mehrfachausgangs-Funkumgebung von Funkkanalsimulation im Funkkanalsimulator (24) herrührt.

8. Simulationsanordnung zur Erzeugung von Daten für Sender- oder Empfänger-Simulationen, wobei erzeugte Daten Mehrfacheingangs-Mehrfachausgangs-Funkumgebungs- (14, 24) Charakteristika enthalten, **dadurch gekennzeichnet, dass** die Anordnung umfasst
- ein Sendermodell (11, 21) in einer externen Vorrichtung
- eine Mehrkanal-Basisbandsendereinheit (13, 23, 300), in welche das Sendermodell off-line als Sendermodelldaten zumindest in zwei der Basisbandsenderkanäle (301-303) der Basisbandsendereinheit ladbar ist
- ein Mittel zum Übertragen einer Präambel, der eine Stilleperiode folgt, und der Sendermodelldaten an eine Mehrfacheingangs-Mehrfachausgangs-Funkumgebung (14, 24), welche die übertragenen Daten aufgrund von Mehrfachpfadausbreitung verwürfelt
- Empfangsmittel zum Empfangen von verwürfelten Daten aus der Mehrfacheingangs-Mehrfachausgangs-Funkumgebung (14, 24), und
- eine Mehrkanal-Empfängerbasisbandeinheit (16, 26, 400), die zum Sichern der empfangenen Sendermodelldaten in der Lage ist, die nach der Präambel empfangen werden, die am Anfang der Sendermodelldaten beinhaltet ist, die eine gleiche Anzahl von Kanälen (401, 403) wie die Senderbasisbandeinheit (12, 22, 300) aufweisen.

9. Simulationsanordnung gemäß Anspruch 8, **dadurch gekennzeichnet, dass** die Mehrkanal-Basisbandsendereinheit (13, 23, 300) ein Mittel (310) zum Auslösen von Übertragung in allen Basisbandsenderkanälen (301-303) zum selben Zeitpunkt (t₁) umfasst, welche Auslösung die Übertragung einer Präambel, Stilleperiode einer fallspezifischen Länge und der Sendermodelldaten, die dem Ende der Stilleperiode folgen, verursacht.

10. Simulationsanordnung gemäß Anspruch 9, **dadurch gekennzeichnet, dass** die Mehrkanal-Sendereinheit (12, 22, 300) umfasst:
- zumindest zwei Kanäle (301-303) mit
- einem Basisbandspeicher (32) zum Sichern der Sendermodelldaten, und
- ein D/A-Wandler (33) zum Wandeln der Präambel, Stilleperiode und Sendermodelldaten in Analogsignale, und
- eine Takt/Auslösereinheit (310), um den Kanälen (301-303) ein Sendeauslösesignal und Taktpulse zu erteilen.

11. Simulationsanordnung gemäß Anspruch 8, **dadurch gekennzeichnet, dass** das Mittel zum Senden der Präambel, der Stilleperiode und der Sendermodelldaten an die Mehrfacheingangs-Mehrfachausgangs-Funkumgebung (14, 24) einen Hochkonverter (34) umfasst, der die Signale zu Funkfrequenzsignalen mischt.

12. Simulationsanordnung gemäß Anspruch 8, **dadurch gekennzeichnet, dass** die Mehrfacheingangs-Mehrfachausgangs-Funkumgebung (14) umfasst
- ein Senderantennensystem (131), das zumindest zwei Antennen umfasst
- eine Mehrpfadausbreitungsumgebung, und
- ein Empfangsantennensystem (151), das zumindest zwei Antennen umfasst.

13. Simulationsanordnung gemäß Anspruch 8, **dadurch gekennzeichnet, dass** das Empfangsmittel zum Empfangen von verwürfelten Daten aus der Mehrfacheingangs-Mehrfachausgangs-Funkumgebung (14, 24) einen Herunterkonvertierer (15, 42) zum Mischen der empfangenen Funkfrequenzsignale zum Basisband umfasst.

14. Simulationsanordnung gemäß Anspruch 8, **dadurch gekennzeichnet, dass** die Mehrkanalempfängereinheit (16, 26, 400) umfasst
- zumindest zwei Kanäle (401-403) mit
- einem A/D-Wandler (43) zum Wandeln der Präambel, der Stilleperiode und der Empfangsdaten in eine digitale Form, und
- einen Basisbandspeicher (44) zum Sichern der gewandelten Daten, und
- eine Takt/Auslöseeinheit (410), um ein Empfangsauslösesignal und Taktimpulse an die Kanäle (401-403) zu geben.

15. Simulationsanordnung gemäß Anspruch 8, **dadurch gekennzeichnet, dass** die Mehrfacheingangs-Mehrfachausgangs-Funkumgebung (24) einen Digital-Funkkanalsimulator umfasst, bei dem die Funkkanäle durch FIR-Filter an einer Basisbandfrequenz simuliert werden, um einen Verwürfelungseffekt an den Sendermodelldaten hervorzurufen.

16. Basisbandsendereinheit (300) zum Erzeugen von DatenSender- oder Empfängersimulationen, wobei erzeugte Daten Mehrfacheingangs-Mehrfachausgangs-Funkumgebungs- (14, 24) Charakteristika beinhalten, **dadurch gekennzeichnet, dass** sie umfasst
- zumindest zwei Basisbandsenderkanäle (301-303), in die ein externes Sendermodell (11, 21) off-line aus einer externen Vorrichtung (350) als Sendermodelldaten ladbar ist
- eine Takt/Auslöseeinheit (310), die mit den Kanälen (301-303) verbunden ist
- zum Auslösen von Übertragung in allen Basisbandsenderkanälen zum selben Zeitpunkt (t₁), welche Auslösung die Übertragung einer Präambel und einer Stilleperiode mit einer fallspezifischen Länge nach ihr verursacht; und
- zum Erzeugen von Taktimpulsen an die Kanäle (301-303) während der Übertragung der Sendermodelldaten heraus aus den Kanälen, und
- eine Schnittstelleneinheit (320) zum Übertragen von Befehlen und Sendermodelldaten (11, 21) aus einer externen Vorrichtung (350) an zumindest einen der Kanäle (301-303) der Basisbandsendereinheit.

17. Basisbandsendereinheit (300) gemäß Anspruch 16, **dadurch gekennzeichnet, dass** die Kanäle (301-303) umfassen
- einen Speicher (32) für eine In-Phasen-Komponente (I) und eine Quadraturkomponente (Q) der Sendermodelldaten, und
- zwei D/A-Wandler 833) zum Wandeln beider Signalkomponenten (I, Q) in Analogsignale.

18. Basisbandempfängereinheit (400) zum Erzeugen von Daten für Sender- oder Empfängersimulationen, wobei erzeugte Daten Mehrfacheingangs-Mehrfachausgangs-Funkumgebungs- (14, 24) Charakteristika beinhalten, **dadurch gekennzeichnet, dass** sie umfasst
- zumindest zwei Basisbandempfängerkanäle (401-403) zum Empfangen von Echtzeitdaten
- eine Takt/Auslöseeinheit (410), die mit den Kanälen (401-403) verbunden ist
- zum Auslösen eines Sicherungsvorgangs der Empfangsdaten in allen Basisbandempfängerkanälen zum selben Zeitpunkt, wenn eine Präambel und eine Stilleperiode einer fallspezifischen Länge, die in den Sendermodelldaten enthalten sind, detektiert werden, und
- zum Erzeugen von Taktimpulsen, die für die Übertragung der Empfangsdaten an die Kanäle (401-403) nötig sind, und
- eine Schnittstelleneinheit (420) zum Empfangen von Anwenderbefehlen und zum Übertragen der empfangenen Sendermodelldaten an eine externe Vorrichtung (450).

19. Basisbandempfängereinheit (400) gemäß Anspruch 18, **dadurch gekennzeichnet, dass** die Kanäle (401-403) umfassen
- zwei A/D-Wandler (33) zum Wandeln beider Signalkomponenten (I, Q) in Digitalsignale, und
- einen Speicher (44) zum Sichern beider In-Phase-Komponenten (I) und Quadraturkomponenten (Q) der Sendermodelldaten.

## Revendications

1. Procédé pour engendrer des données pour des simulations d'émetteur ou de récepteur où les données engendrées comprennent des caractéristiques d'environnement radio à entrée multiple/sortie multiple, **caractérisé en ce que** dans le procédé :
- un modèle (11,21) d'émetteur est chargé (72) depuis un dispositif externe hors connexion au moins dans deux voies (301 à 303) d'émetteur en bande de base d'un module (12, 22, 300) d'émetteur en bande de base pour construire des données de modèle d'émetteur ;
- un déclenchement (73) d'émission se produit dans toutes les voies (301 à 303) d'émetteur en bande de base au même instant (t₁) lequel déclenchement provoque d'abord l'émission d'un préambule et après cela d'une période de silence d'une longueur (t₂, t₃) spécifique au cas ;
- l'émission des données de modèle d'émetteur suit immédiatement après la fin de la période de silence (74, t₃, t₄) ;
- un environnement radio (14, 24) à entrée multiple/sortie multiple brouille (75) les données émises en raison d'une propagation par trajet multiple ;
- un module (16, 26, 400) de récepteur multivoie en bande de base possédant au moins deux voies (401 à 403) de récepteur en bande de base reçoit (76) les données brouillées ;
- les données brouillées reçues sont sauvegardées dans au moins deux voies (401 à 403) de récepteur en bande de base en commençant après la fin du préambule et de la période de silence, reçus, (77, t₃) ; et
- les données sauvegardées sont transférées hors connexion (78) à un équipement externe pour construction d'un modèle (17, 27) de récepteur.

2. Procédé selon la revendication 1, **caractérisé en ce qu'**après le déclenchement destiné à accomplir ladite émission :
- le préambule et la période de silence sont transportés, sous forme de signaux en bande de base, des voies (301 à 303) en bande de base d'émetteur à un environnement radio (14, 24) à entrée multiple/sortie multiple ; et ensuite
- les données de modèle d'émission sont transférées, sous forme de signaux en bande de base, des voies (301 à 303) en bande de bases d'émetteur à l'environnement radio (14, 24) à entrée multiple/sortie multiple.

3. Procédé selon la revendication 2, **caractérisé en ce qu'**après le déclenchement destiné à accomplir ladite émission :
- un convertisseur de numérique en analogique (D/A pour "Digital/Analog") (33) convertit le préambule et la période de silence en des signaux analogiques ;
- le convertisseur D/A (33) convertit les données de modèle d'émission en des signaux analogiques ;
- un convertisseur élévateur de fréquence (34) mélange lesdits signaux analogiques pour obtenir des signaux HF ; et
- les signaux HF sont délivrés à un système (131) d'antennes d'émetteur comprenant au moins deux antennes.

4. Procédé selon la revendication 1, **caractérisé en ce que** ledit brouillage dans l'environnement radio (14) à entrée multiple/sortie multiple résulte :
- de l'émission des signaux HF en utilisant le système (131) d'antennes d'émetteur ; et
- de la propagation par trajet multiple jusqu'à un système (151) d'antennes de récepteur.

5. Procédé selon la revendication 1, **caractérisé en ce que** dans ladite réception des données brouillées :
- un système (151) d'antennes de récepteur d'au moins deux antennes reçoit les signaux HF émis ;
- un convertisseur abaisseur de fréquence (15) mélange les signaux HF reçus pour obtenir des signaux en bande de base ;
- un convertisseur d'analogique en numérique (A/D pour "Analog/Digital") (43) convertit le préambule analogique et la période de silence en des signaux numériques, qui sont transportés jusqu'à un module (410) d'horloge/déclencheur ; et
- le convertisseur A/D (43) convertit les données reçues de modèle d'émission analogique en signaux numériques, qui sont transportés jusqu'aux voies (401 à 403) de récepteur en bande de base.

6. Procédé selon la revendication 1, **caractérisé en ce que** dans ladite réception des données brouillées :
- le préambule et la période de silence sont transportés de l'environnement radio (14, 24) à entrée multiple/sortie multiple à un module (410) d'horloge/ déclencheur ; et
- les données brouillées sont transportées de l'environnement radio (14, 24) à entrée multiple/sortie multiple aux voies (401 à 403) de récepteur en bande de base.

7. Procédé selon les revendications 2 ou 6, **caractérisé en ce que** ledit brouillage dans l'environnement radio à entrée multiple/sortie multiple résulte d'une simulation radio dans le simulateur (24) de voie radio.

8. Agencement de simulation destiné à engendrer des données pour des simulations d'émetteur ou de récepteur où des données engendrées incluent des caractéristiques d'environnement radio (14, 24) à entrée multiple/sortie multiple, **caractérisé en ce que** l'agencement comprend :
- un modèle (11,21) d'émetteur dans un dispositif externe ;
- un module (13, 23, 300) d'émetteur multivoie en bande de base dans lequel le modèle d'émetteur peut être chargé hors connexion sous forme de données de modèle d'émetteur au moins dans deux voies (301 à 303) d'émetteur en bande de base du module d'émetteur en bande de base ;
- un moyen destiné à transférer un préambule, qui est suivi par une période de silence et par les données de modèle d'émetteur, à un environnement radio (14, 24) à entrée multiple/sortie multiple, qui brouille les données transmises en raison d'une propagation par trajet multiple ;
- un moyen de réception destiné à recevoir les données brouillées provenant de l'environnement radio (14, 24) à entrée multiple/sortie multiple ; et
- un module (16, 26, 400) de récepteur multivoie en bande de base capable de sauvegarder les données reçues de modèle d'émetteur, qui sont reçues après le préambule inclus dans le début des données de modèle d'émetteur, ayant un nombre de voies (401 à 403) égal au module (12, 22, 300) d'émetteur en bande de base.

9. Agencement de simulation selon la revendication 8, **caractérisé en ce que** le module (13, 23, 300) d'émetteur multivoie en bande de base comprend un moyen (310) destiné à déclencher l'émission dans toutes les voies (301 à 303) d'émetteur en bande de base au même instant (t₁), lequel déclenchement provoque l'émission d'un préambule, d'une période de silence d'une longueur spécifique au cas et des données de modèle d'émetteur à la suite de la fin de la période de silence.

10. Agencement de simulation selon la revendication 9, **caractérisé en ce que** le module (12, 22, 300) d'émetteur multivoie comprend :
- au moins deux voies (301 à 303) comportant :
- une mémoire (32) en bande de base destinée à sauvegarder les données de modèle d'émetteur ; et
- un convertisseur D/A (33) destiné à convertir en signaux analogiques le préambule, la période de silence et les données de modèle d'émission ; et
un module (310) d'horloge/déclencheur destiné à donner, aux voies (301 à 303), un signal de déclenchement d'émission et des impulsions d'horloge.

11. Agencement de simulation selon la revendication 8, **caractérisé en ce que** ledit moyen destiné à transférer le préambule, la période de silence et les données de modèle d'émetteur à l'environnement radio (14, 24) à entrée multiple/ sortie multiple comprend un convertisseur élévateur de fréquence (34) pour obtenir des signaux HF.

12. Agencement de simulation selon la revendication 8, **caractérisé en ce que** ledit environnement radio (14) à entrée multiple/sortie multiple comprend :
- un système (131) d'antennes d'émission comprenant au moins deux antennes ;
- un environnement de propagation multivoie ; et
- un système (151) d'antennes de réception comprenant au moins deux antennes.

13. Agencement de simulation selon la revendication 8, **caractérisé en ce que** ledit moyen de réception destiné à recevoir les données brouillées provenant de l'environnement radio (14, 24) à entrée multiple/sortie multiple comprend un convertisseur abaisseur de fréquence (15, 42) destiné à mélanger les signaux HF reçus pour obtenir la bande de base.

14. Agencement de simulation selon la revendication 8, **caractérisé en ce que** le module (16, 26, 400) de récepteur multivoie comprend :
- au moins deux voies (401 à 403) comportant :
- un convertisseur A/D (43) destiné à convertir en forme numérique le préambule, la période de silence et les données reçues ; et
- une mémoire (44) en bande de base destinée à sauvegarder les données converties ; et
- un module (410) d'horloge/déclencheur destiné à donner, aux voies (401 à 403), un signal de déclenchement de réception et des impulsions d'horloge.

15. Agencement de simulation selon la revendication 8, **caractérisé en ce que** ledit environnement radio (24) à entrée multiple/sortie multiple comprend un simulateur de voie radio numérique où les voies radio sont simulées par des filtres à réponse impulsionnelle finie (FIR pour "Finite Impulse Response") à une fréquence de bande de base pour faire apparaître un effet de brouillage pour les données de modèle d'émetteur.

16. Module (300) d'émetteur en bande de base destiné à engendrer des données pour des simulations d'émetteur ou de récepteur où les données engendrées incluent des caractéristiques d'environnement radio (14, 24) à entrée multiple/sortie multiple, **caractérisé en ce qu'**il comprend :
- au moins deux voies (301 à 303) d'émetteur en bande de base dans lesquelles un modèle (11, 21) d'émetteur externe peut être chargé hors connexion à partir d'un dispositif externe (350) sous forme de données de modèle d'émetteur ;
- un module (310) d'horloge/déclenchement connecté aux voies (301 à 303) :
- destiné à déclencher l'émission dans toutes les voies d'émetteur en bande de base au même instant (t₁) lequel déclenchement provoque l'émission d'un préambule et, après lui, d'une période de silence d'une longueur spécifique au cas ; et
- destiné à engendrer des impulsions d'horloge pour les voies (301 à 303) pendant le transfert, à partir des voies, des données de modèle d'émetteur ; et
- un module (320) d'interface destiné à transférer des instructions et les données (11, 21) de modèle d'émetteur d'un dispositif externe (350) à au moins l'une des voies (301 à 303) du module d'émetteur en bande de base.

17. Module (300) d'émetteur en bande de base selon la revendication 16, **caractérisé en ce que** les voies (301 à 303) comprennent :
- une mémoire (32) pour la composante en phase (I) et la composante en quadrature (Q) des données de modèle d'émetteur ; et
- deux convertisseurs D/A (33) destinés à convertir en signaux analogiques les deux composantes (I, Q) de signal.

18. Module (400) de récepteur en bande de base destiné à engendrer des données pour des simulations d'émetteur ou de récepteur où les données engendrées incluent des caractéristiques d'environnement radio (14, 24) à entrée multiple/sortie multiple, **caractérisé en ce qu'**il comprend :
- au moins deux voies (401 à 403) de récepteur en bande de base destinées à recevoir des données en temps réel ;
- un module (410) d'horloge/déclenchement connecté aux voies (401 à 403):
- destiné à déclencher une opération de sauvegarde des données reçues dans toutes les voies de récepteur en bande de base au même instant lorsqu'un préambule et une période de silence d'une longueur spécifique au cas inclus dans les données de modèle d'émetteur sont détectés ; et
- destiné à engendrer des impulsions d'horloge nécessaires pour transférer les données reçues aux voies (401 à 403) ; et
- un module (420) d'interface destiné à recevoir des instructions d'utilisateur et à transférer, à un dispositif externe (450), les données reçues de modèle d'émetteur.

19. Module (400) de récepteur en bande de base selon la revendication 18, **caractérisé en ce que** les voies (401 à 403) comprennent :
- deux convertisseurs A/D (33) destinés à convertir en signaux numériques les deux composantes (I, Q) de signal ; et
- une mémoire (44) destinée à sauvegarder à la fois la composante en phase (I) et la composante en quadrature (Q) des données de modèle d'émetteur.
